# EUROPEAN PATENT SPECIFICATION

(11) **EP 2 743 471 B1**
(45) Date of publication and mention of the grant of the patent: **19.10.2016**
(21) Application number: 13197166.5
(22) Date of filing: 13.12.2013
(51) Int. Cl.: F01N 3/20

(54) **A reductant delivery system**
Reduktionsmittelabgabesystem
Système de distribution d'agent réducteur

(30) Priority: 17.12.2012 US 201213717184
(43) Date of publication of application: 18.06.2014
(73) Proprietor: Deere & Company, Moline, IL 61265 (US)
(72) Inventor: Turner, Christopher D., Waterloo, IA Iowa 50701 (US); Slattery, Timothy P., Hudson, IA Iowa 50643-2001 (US); Luke, Keith A., Waterloo, IA Iowa 50701 (US); Pipho, Michael J., Dunkerton, IA Iowa 50626 (US)
(74) Representative: John Deere GmbH & Co. KG

(56) References cited:
- EP-A1- 2 447 490
- WO-A1-2011/145570
- DE-A1-102004 054 238
- DE-A1-102009 040 111
- US-A1- 2011 107 812

## Description

The present disclosure relates to a reductant delivery system. More specifically, the present disclosure relates to a reductant delivery system comprising a reductant quality sensor.

All engines-diesel, gasoline, propane, and natural gas-produce exhaust gas containing carbon monoxide, hydrocarbons, and nitrogen oxides. These emissions are the result of incomplete combustion. Diesel engines also produce particulate matter.

As more government focus is being placed on health and environmental issues, agencies around the world are enacting more stringent emissions' laws.

Because so many diesel engines are used in trucks, the U.S. Environmental Protection Agency and its counterparts in Europe and Japan first focused on setting emissions regulations for the on-road market. While the worldwide regulation of nonroad diesel engines came later, the pace of cleanup and rate of improvement has been more aggressive for nonroad engines than for on-road engines.

Manufacturers of nonroad diesel engines are expected to meet set emissions regulations. For example, Tier 3/Stage III A emissions regulations required an approximate 65 percent reduction in particulate matter (PM) and a 60 percent reduction in NOₓ from 1996 levels. As a further example, Interim tier 4/Stage III B regulations required a 90 percent reduction in PM along with a 50 percent drop in NOₓ. Still further, Final Tier 4/Stage IV regulations, which will be fully implemented by 2015, will take PM and NOₓ emissions to near-zero levels.

In the future, a reductant quality sensor may be necessary for meeting EPA regulations or, more specifically, stringent functionality requirements, such as detecting low levels of dilution of a reductant and detecting such low levels of dilution quickly. Such functionality requirements may be in place beginning in 2015 or 2016.

Some known reductant quality sensors may not provide a quality signal, unless sufficient reductant is flowing thereby and doing so under sufficient pressure, even prior to when a reducant delivery mechanism delivers reductant. Otherwise, the bubbles may form on the reductant quality sensor, which interfere with the ability of the reductant quality sensor to operate properly. Further yet, some known reductant quality sensors are sensitive to the reductant freezing thereby, thus requiring their respective systems to be purged upon engine shutdown.

EP 2 447 490 A1 discloses a reductant delivery system that facilitates purging the system upon engine shut down.

Disclosed is a reductant delivery system comprising a reductant tank, a reductant delivery mechanism, a reductant pressure source, and an extraction passage. The extraction passage is coupled fluidly to the reductant tank and the reductant pressure source therebetween. The reductant delivery system also comprises a reductant manifold that comprises a junction positioned therein. Further, the reductant manifold comprises (1) a supply passage coupled fluidly to the reductant pressure source and the junction therebetween, (2) a dosing passage coupled fluidly to the reductant delivery mechanism and the junction therebetween, and (3) a return passage coupled fluidly to the reductant tank and the junction therebetween. The reductant delivery system comprises a reductant quality sensor positioned in the supply passage.

The detailed description of the drawings refers to the accompanying figures in which:
FIG 1. is a power system comprising a first embodiment of a reductant delivery system;
FIG 2. is the power system comprising a second embodiment of a reductant delivery system; and
FIG. 3 is the power system comprising a third embodiment of reductant delivery system.

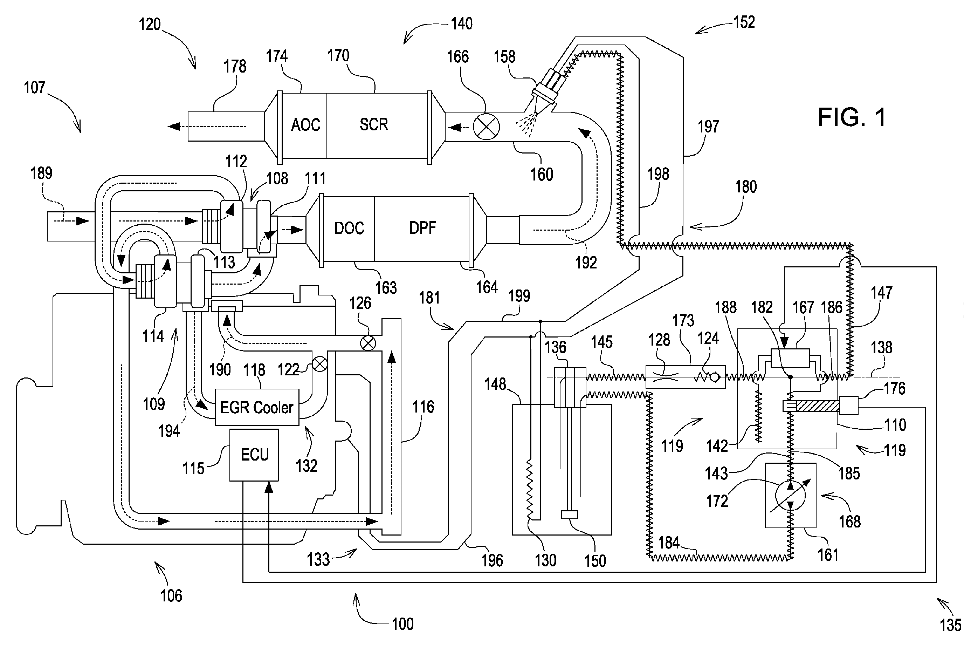

Referring to FIG. 1, there is shown a schematic illustration of a power system 100 comprising an engine 106. The power system 100 may be used for providing power to a variety of machines, including on-highway trucks, construction vehicles, marine vessels, stationary generators, automobiles, agricultural vehicles, and recreation vehicles.

The engine 106 may be any kind of engine 106 that produces an exhaust gas, the exhaust gas being indicated by directional arrow 192. For example, engine 106 may be an internal combustion engine, such as a gasoline engine, a diesel engine, a gaseous fuel burning engine (e.g., natural gas) or any other exhaust gas producing engine. The engine 106 may be of any size, with any number cylinders (not shown), and in any configuration (e.g., "V," inline, and radial). Although not shown, the engine 106 may include various sensors, such as temperature sensors, pressure sensors, and mass flow sensors.

The power system 100 may comprise an intake system 107. The intake system 107 may comprise components configured to introduce a fresh intake gas, indicated by directional arrow 189, into the engine 106. For example, the intake system 107 may comprise an intake manifold (not shown) in communication with the cylinders, a compressor 112, a charge air cooler 116, and an air throttle actuator 126.

Exemplarily, the compressor 112 may be a fixed geometry compressor, a variable geometry compressor, or any other type of compressor configured to receive the fresh intake gas, from upstream of the compressor 112. The compressor 112 compress the fresh intake gas to an elevated pressure level. As shown, the charge air cooler 116 is positioned downstream of the compressor 112, and it is configured to cool the fresh intake gas. The air throttle actuator 126 may be positioned downstream of the charge air cooler 116, and it may be, for example, a flap type valve controlled by an electronic control unit (ECU) 115 to regulate the air-fuel ratio.

Further, the power system 100 may comprise an exhaust system 140. The exhaust system 140 may comprise components configured to direct exhaust gas from the engine 106 to the atmosphere. Specifically, the exhaust system 140 may comprise an exhaust manifold (not shown) in fluid communication with the cylinders. During an exhaust stroke, at least one exhaust valve (not shown) opens, allowing the exhaust gas to flow through the exhaust manifold and a turbine 111. The pressure and volume of the exhaust gas drives the turbine 111, allowing it to drive the compressor 112 via a shaft (not shown). The combination of the compressor 112, the shaft, and the turbine 111 is known as a turbocharger 108.

The power system 100 may also comprise, for example, a second turbocharger 109 that cooperates with the turbocharger 108 (i.e., series turbocharging). The second turbocharger 109 comprises a second compressor 114, a second shaft (not shown), and a second turbine 113. Exemplarily, the second compressor 114 may be a fixed geometry compressor, a variable geometry compressor, or any other type of compressor configured to receive the fresh intake flow, from upstream of the second compressor 114, and compress the fresh intake flow to an elevated pressure level before it enters the engine 106.

The power system 100 may also comprises an exhaust gas recirculation (EGR) system 132 that is configured to receive a recirculated portion of the exhaust gas, as indicated by directional arrow 194. The intake gas is indicated by directional arrow 190, and it is a combination of the fresh intake gas and the recirculated portion of the exhaust gas. The EGR system 132 comprises an EGR valve 122, an EGR cooler 118, and an EGR mixer (not shown).

The EGR valve 122 may be a vacuum controlled valve, allowing a specific amount of the recirculated portion of the exhaust gas back into the intake manifold. The EGR cooler 118 is configured to cool the recirculated portion of the exhaust gas flowing therethrough. Although the EGR valve 122 is illustrated as being downstream of the EGR cooler 118, it could also be positioned upstream from the EGR cooler 118. The EGR mixer is configured to mix the recirculated portion of the exhaust gas and the fresh intake gas into, as noted above, the intake gas.

As further shown, the exhaust system 140 may comprise an aftertreatment system 120, and at least a portion of the exhaust gas passes therethrough. The aftertreatment system 120 is configured to remove various chemical compounds and particulate emissions present in the exhaust gas received from the engine 106. After being treated by the exhaust aftertreatment system 120, the exhaust gas is expelled into the atmosphere via a tailpipe 178.

[In the illustrated embodiment, the exhaust aftertreatment system 120 comprises a diesel oxidation catalyst (DOC) 163, a diesel particulate filter (DPF) 164, and a selective catalytic reduction (SCR) system 152. The SCR system 152 comprises a first reductant delivery system 135, an SCR catalyst 170, and an ammonia oxidation catalyst (AOC) 174. Exemplarily, the exhaust gas flows through the DOC 163, the DPF 164, the SCR catalyst 170, and the AOC 174, and is then, as just mentioned, expelled into the atmosphere via the tailpipe 178.

In other words, in the embodiment shown, the DPF 164 is positioned downstream of the DOC 163, the SCR catalyst 170 downstream of the DPF 164, and the AOC 174 downstream of the SCR catalyst 170. The DOC 163, the DPF 164, the SCR catalyst 170, and the AOC 174 may be coupled together. Exhaust gas treated, in the aftertreatment system 120, and released into the atmosphere contains significantly fewer pollutants-such as diesel particulate matter, NO2, and hydrocarbons-than an untreated exhaust gas.

The DOC 163 may be configured in a variety of ways and contain catalyst materials useful in collecting, absorbing, adsorbing, and/or converting hydrocarbons, carbon monoxide, and/or oxides of nitrogen contained in the exhaust gas. Such catalyst materials may include, for example, aluminum, platinum, palladium, rhodium, barium, cerium, and/or alkali metals, alkaline-earth metals, rare-earth metals, or combinations thereof. The DOC 163 may include, for example, a ceramic substrate, a metallic mesh, foam, or any other porous material known in the art, and the catalyst materials may be located on, for example, a substrate of the DOC 163. The DOC(s) may also be configured to oxidize NO contained in the exhaust gas, thereby converting it to NO2. Or, stated slightly differently, the DOC 163 may assist in achieving a desired ratio of NO to NO2 upstream of the SCR catalyst 170.

The DPF 164 may be any of various particulate filters known in the art configured to reduce particulate matter concentrations, e.g., soot and ash, in the exhaust gas to meet requisite emission standards. Any structure capable of removing particulate matter from the exhaust gas of the engine 106 may be used. For example, the DPF 164 may include a wall-flow ceramic substrate having a honeycomb cross-section constructed of cordierite, silicon carbide, or other suitable material to remove the particulate matter. The DPF 164 may be electrically coupled to a controller, such as the ECU 115, that controls various characteristics of the DPF 164.

If the DPF 164 were used alone, it would initially help in meeting the emission requirements, but would quickly fill up with soot and need to be replaced. Therefore, the DPF 164 is combined with the DOC 163, which helps extend the life of the DPF 164 through the process of regeneration. The ECU 115 may be configured to measure the PM build up, also known as filter loading, in the DPF 164, using a combination of algorithms and sensors. When filter loading occurs, the ECU 115 manages the initiation and duration of the regeneration process.

Moreover, the delivery system 135 may comprise a reductant tank 148 configured to store the reductant. One example of a reductant is a solution having 32.5% high purity urea and 67.5% deionized water (e.g., DEF), which decomposes as it travels through a decomposition tube 160 to produce ammonia. Such a reductant may begin to freeze at approximately 12 deg F (-11 deg C). If the reductant freezes when a machine is shut down, then the reductant may need to be thawed before the SCR system 152 can function.

The delivery system 135 may comprise a reductant header 136 mounted to the reductant tank 148, the reductant header 136 further comprising, in some embodiments, a level sensor 150 configured to measure a quantity of the reductant in the reductant tank 148. The level sensor 150 may comprise a float configured to float at a liquid/air surface interface of reductant included within the reductant tank 148.

Other implementations of the level sensor 150 are possible, and may include, exemplarily, one or more of the following: (a) using one or more ultrasonic sensors; (b) using one or more optical liquid-surface measurement sensors; (c) using one or more pressure sensors disposed within the reductant tank 148; and (d) using one or more capacitance sensors.

In the illustrated embodiment, the reductant header 136 comprises a tank heating element 130 that is configured to receive coolant from the engine 106, and the power system 100 may comprise a cooling system 133 that comprises a coolant supply passage 180 and a coolant return passage 181. A first segment 196 of the coolant supply passage 180 is positioned fluidly between the engine 106 and the tank heating element 130 and is configured to supply coolant to the tank heating element 130.

The coolant circulates, through the tank heating element 130, so as to warm the reductant in the reductant tank 148, therefore reducing the risk that the reductant freezes therein. In an alternative embodiment, the tank heating element 130 may, instead, be an electrically resistive heating element.

A second segment 197 of the coolant supply passage 180 is positioned fluidly between the tank heating element 130 and a reductant delivery mechanism 158 and is configured to supply coolant thereto. The coolant heats the reductant delivery mechanism 158, consequently reducing the risk that reductant freezes therein.

A first segment 198 of the coolant return passage 181 is positioned between the reductant delivery mechanism 158 and the tank heating element 130, and a second segment 199 of the coolant return passage 181 is positioned between the engine 106 and the tank heating element 130. The first and second segments 198, 199 are configured to return the coolant to the engine 106.

The decomposition tube 160 may be positioned downstream of the reductant delivery mechanism 158 but upstream of the SCR catalyst 170. The reductant delivery mechanism 158 may be, for example, an injector that is selectively controllable to inject reductant directly into the exhaust gas. As shown, the SCR system 152 may comprise a reductant mixer 166 that is positioned upstream of the SCR catalyst 170 and downstream of the reductant delivery mechanism 158.

The delivery system 135 may additionally comprise a reductant pressure source 172 and an extraction passage 184. The extraction passage 184 may be coupled fluidly to the reductant tank 148 and the reductant pressure source 172 therebetween. Exemplarily, the extraction passage 184 is shown extending into the reductant tank 148, though in other embodiments the extraction passage 184 may be coupled to an extraction tube via the reductant header 136. The delivery system 135 may further comprise a reductant supply module 168, and it may comprise the reductant pressure source 172. Additionally, the reductant supply module 168 may comprise a module housing 161, and the reductant pressure source 172 may be positioned therein. Exemplarily, the reductant supply module 168 may be, or similar to, a Bosch reductant supply module, such as the one found in the "Bosch Denoxtronic 2.2 - Urea Dosing System for SCR Systems."

The delivery system 135 also comprises a reductant manifold 119, which comprises a junction 182, a supply passage 185, a dosing passage 186, and a return passage 188. The return passage 188 is shown extending into the reductant tank 148, though in other embodiments the return passage 188 may be coupled to a return tube via the reductant header 136.

The junction 182 is positioned in the reductant manifold 119. Although not shown, in some embodiments, the reductant manifold 119 may be integrated into the reductant header 136. The supply passage 185 is coupled fluidly to the reductant pressure source 172 and the junction 182 therebetween. Further, the dosing passage 186 is coupled fluidly to the reductant delivery mechanism 158 and the junction 182 therebetween. And the return passage 188 is coupled fluidly to the reductant tank 148 and the junction 182 therebetween.

The delivery system 135 may comprise-among other things-valves, orifices, sensors, and pumps positioned in the extraction, supply, dosing, and return passages 184, 185, 186, 188. For example, the delivery system 135 may comprise a reductant quality sensor 176 that is positioned in the supply passage 185. In the embodiment shown in FIG. 1, for example, the reductant quality sensor 176 may be mounted to the reductant manifold 119.

Some embodiments of the reductant quality sensor 176 may not provide a quality signal, unless reductant is flowing thereby and doing so under sufficient pressure, even prior to when the reducant delivery mechanism 158 delivers any reductant. Otherwise, for example, bubbles may form on the reductant quality sensor 176, and prevent it from operating properly.

Consequently, the reductant quality sensor 176 may not operate properly in the return passage 188, because only a portion of the reductant flows therethrough, and that portion may not be sufficiently pressurized. And the reductant quality sensor 176 may not operate properly in the dosing passage 186 either, because the reductant does not flow through the dosing passage 186 until after the reductant delivery mechanism 158 begins delivering reductant. But even then, the reductant flows through the dosing passage 186 quite slowly. To illustrate, in some embodiments of the delivery system 135, only about 10% of the reductant flows through the dosing passage 186, leaving 90% to flow through the return passage 188 instead.

The reductant quality sensor 176 may also be referred to as a DEF quality sensor or a urea quality sensor. And, exemplarily, Measurement Specialties may be the manufacturer thereof (e.g., Fluid Property Sensor FPS5851 DLC4 or FPS2851 ULC4). In such an embodiment, the reductant quality sensor 176 may directly and simultaneously measure the critical parameters of aqueous urea solution. The measurements of both the reductant concentration and in line temperature, for example, enable users to determine if the quality of the employed reductant will enable the SCR system 152 to achieve optimal performance. Further, in such an embodiment, the reductant quality sensor 176 may rely on simultaneous measurement of a fluid viscosity, density, and dielectric constant to detect unauthorized fluids and to allow the identification of proper reductant. This is just one example of a reductant quality sensor. Alternatively, the reductant quality sensor 176 may be one that measures the resistivity or dielectric constant of the reductant.

Proper operation of the reductant quality sensor 176 may require sufficient reductant flow and reductant pressure thereby. This may prevent bubbles from collecting on the reductant quality sensor 176, which may allow it to provide more accurate readings than otherwise possible.

Exemplarily, the return passage 188 and the dosing passage 186 may be positioned coaxially relative to one another (see axis 138). Further, the supply passage 185 and the return passage 188 and the dosing passage 186 may cooperate so as to form a "T" shape within the reductant manifold 119, though they cooperate to make other shapes, too (e.g., "V" shape).

Further, some embodiments of the reductant quality sensor 176 may be sensitive to the reductant freezing thereby, thus requiring their respective reductant delivery systems to purge themselves upon engine shutdown. To do this, the reductant pressure source 172 may be a bi-directional pump that is configured to pump the reductant to the supply passage 185 in a first mode. But, it may also be configured to pump the reductant to the extraction passage 184 and to the reductant tank 148 in a second mode, so as to purge the supply, dosing, and/or return passages 185, 186, 188. Otherwise, the reductant may freeze therein.

[Although not shown in FIG. 1, the delivery system 135 may alternatively comprise a reversing valve positioned fluidly between the reductant pressure source 172 and the junction 182, wherein the pressure source 172 is a unidirectional pump. In such an embodiment, the reversing valve and the unidirectional pump may cooperate so as to provide reductant to the supply passage 185 in a first mode, but to supply reductant to the extraction passage 184 in a second mode. As a result, the second mode purges the supply, dosing, and/or return passages 185, 186, 188.

The delivery system 135 may comprise a heating element 142 positioned adjacent to and/or overlapping the reductant manifold 119, the heating element 142 being configured to heat selectively the reductant manifold 119 so as to prevent the reductant from freezing therein. Exemplarily, the heating element 142 is an electrical resistance heating element.

The return passage 188 may comprise a check valve 124 and an orifice 128, and the check valve 124 opens away from the supply passage 185. The orifice 128 is positioned fluidly between the check valve 124 and the reductant tank 148. As shown in FIG. 1, the check valve 124 and/or the orifice 128 may be positioned apart from the reductant manifold 119. In such an embodiment, the delivery system 135 may comprise a fitting 173, and the check valve 124 and/or the orifice 128 may be positioned in the fitting 173 as a unit. Although not shown in FIG. 1, the fitting 173 may be positioned in the reductant manifold 119.

Exemplarily, the delivery system 135 may comprise supply, return, and dosing passage heating elements 143, 145, 147. The supply passage heating element 143 may overlap the supply passage 185 and the reductant manifold 119, and may be configured to heat selectively the supply passage 185 so as to prevent the reductant from freezing therein. Similarly, the return passage heating element 145 may overlap the return passage 188 and the reductant manifold 119, and may be configured to heat selectively the return passage 188 so as to prevent the reductant from freezing therein. And the dosing passage heating element 147 may overlap the dosing passage 186 and the reductant manifold 119, and may be configured to heat selectively the dosing passage 186 so as to prevent the reductant from freezing therein.

Exemplarily, the reductant manifold 119 may comprise an electrical power source 167 and a manifold housing 110. The electrical power source 167 may be mounted to the manifold housing 110. The supply, return, and dosing passage heating elements 143, 145, 147 may be electrically connected to the electrical power source 167, and they may be configured to receive power from therefrom. Similarly, the heating element 142 may also be configured to receive power from the electrical power source 167.

As mentioned above, one example of a reductant is a solution having 32.5% high purity urea and 67.5% deionized water (e.g., DEF), which decomposes as it travels through the decomposition tube 160 to produce ammonia. The ammonia reacts with NOₓ in the presence of the SCR catalyst 170, and it reduces the NOₓ to less harmful emissions, such as N2 and H2O. The SCR catalyst 170 may be any of various catalysts known in the art. For example, in some embodiments, the SCR catalyst 170 may be a vanadium-based catalyst. But in other embodiments, the SCR catalyst 170 may be a zeolite-based catalyst, such as a Cu-zeolite or a Fe-zeolite.

The AOC 174 may be any of various flowthrough catalysts configured to react with ammonia to produce mainly nitrogen. Generally, the AOC 174 is utilized to remove ammonia that has slipped through or exited the SCR catalyst 170. As shown, the AOC 174 and the SCR catalyst 170 may be positioned within the same housing. But in other embodiments, they may be separate from one another.

The aftertreatment system 120 shows one DOC 163, one DPF 164, one SCR catalyst 170, and one AOC 174-all within a specific order relative to one another. But in other embodiments, the aftertreatment system 120 may have more or less exhaust aftertreatment devices than shown, and they may be in a different order (without departing from the essence of the disclosure).

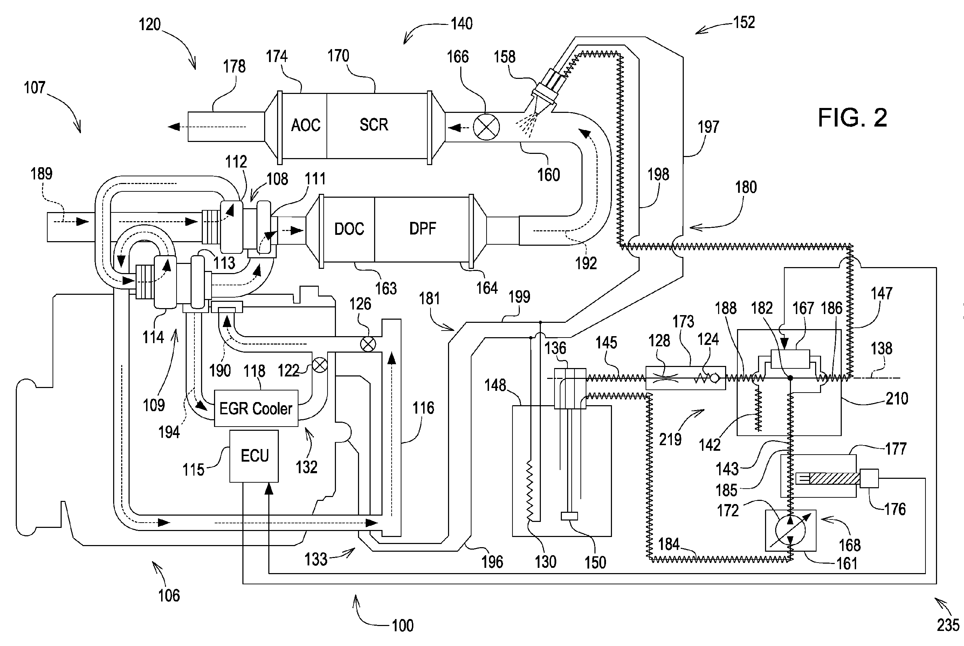

FIG. 2 illustrates an embodiment of the power system 100 in which it comprises a second reductant delivery system 235. The second reductant delivery system 235 has several components that are similar in structure and function as the first reductant delivery system 135, as indicated by use of identical reference numbers where applicable. As shown in FIG. 2, the supply passage 185 may comprise a sensor fitting 177, and the reductant quality sensor 176 may be mounted to the sensor fitting 177. The sensor fitting 177 is separate and distinct with respect to a reductant manifold 219 or, more specifically, a manifold housing 210.

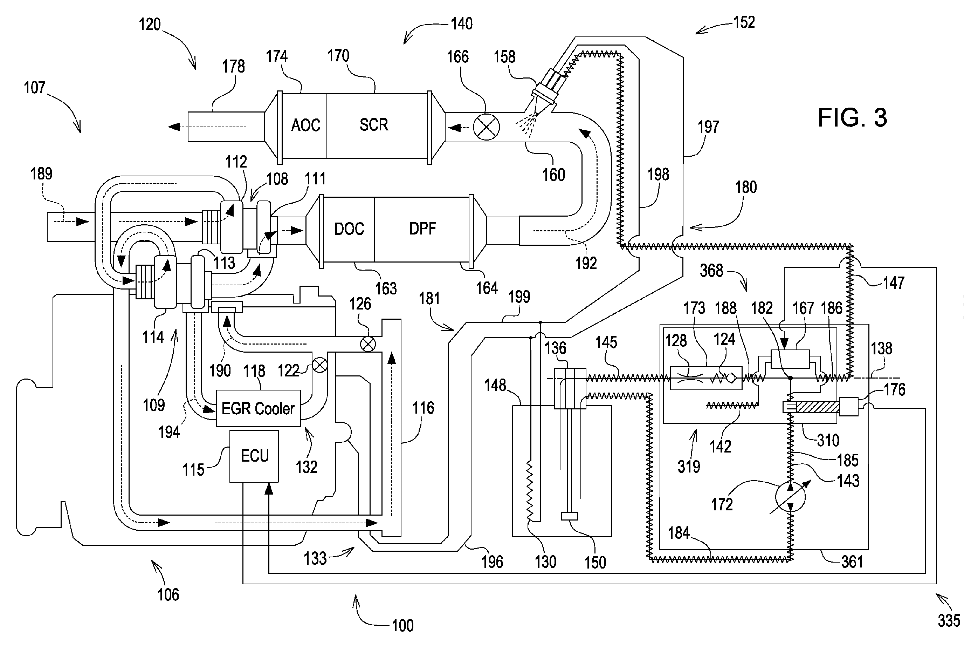

Finally, FIG. 3 illustrates an embodiment of the power system 100 in which it comprises a third reductant delivery system 335. The third reductant delivery system 335 comprises several components that are similar in structure and function as the first and second reductant delivery systems 135, 235, as indicated by use of identical reference numbers where applicable. As shown in the illustrated embodiment in FIG. 3, a reductant supply module 368 comprises a module housing 361, and the reductant pressure source 172 and a reductant manifold 319 are positioned therein. Further, as shown, the check valve 124, the reductant quality sensor 176, and the orifice 128 may be positioned in a manifold housing 310.

Although not shown, in some embodiments, the manifold housing 310 may be designed such that it is, for example, positioned about all of the components that are positioned in the module housing 361. In such an embodiment, the module housing 361 may not be necessary.

## Claims

1. A reductant delivery system (135), comprising:
a reductant tank (148), a reductant delivery mechanism (158), and a reductant pressure source (172);
an extraction passage (184) coupled fluidly to the reductant tank (148) and the reducant pressure source (172) therebetween;
a reductant manifold (119) comprising:
a junction (182) positioned therein,
a supply passage (185) coupled fluidly to the reductant pressure source (172) and the junction (182) therebetween,
a dosing passage (186) coupled fluidly to the reductant delivery mechanism (158) and the junction (182) therebetween, and
a return passage (188) coupled fluidly to the reductant tank (148) and the junction (182) therebetween; **characterized by**
a reductant quality sensor (176) positioned in the supply passage (185).

2. The reductant delivery system (135) according to claim 1, wherein the reductant quality sensor (176) is mounted to the reductant manifold (119).

3. The reductant delivery system (135) according to claim 1, wherein the supply passage (185) comprises a sensor fitting (177), and the reductant quality sensor (176) is mounted to the sensor fitting (177).

4. The reductant delivery system (135) according to one of the claims 1 to 3, wherein the return passage (188) and the dosing passage (186) are positioned coaxially relative to one another within the reductant manifold (119).

5. The reductant delivery system (135) according to one of the claims 1 to 4, wherein the supply passage (185) and the return passage (188) and the dosing passage (186) cooperate to form a "T" shape within the reductant manifold (119).

6. The reductant delivery system (135) according to one of the claims 1 to 5, wherein the reductant pressure source (172) is a bi-directional pump configured to pump a reductant to the supply passage (185) in a first mode and configured to pump the reductant to the extraction passage (184) and to the reductant tank (148) in a second mode.

7. The reductant delivery system (135) according to one of the claims 1 to 5, comprising a reversing valve positioned fluidly between the reductant pressure source (172) and the junction (182), the reductant pressure source (172) being a unidirectional pump.

8. The reductant delivery system (135) according to one of the claims 1 to 7, comprising a heating element (130) positioned adjacent to the reductant manifold (119), the heating element (130) configured to heat selectively the reductant reductant manifold (119) (119) so as to prevent the reductant from freezing therein.

9. The reductant delivery system (135) according to one of the claims 1 to 8, comprising a reductant supply module (168), the reductant supply module (168) comprising the reductant pressure source (172) and a module housing (161), the reductant pressure source (172) and the reductant manifold (119) are positioned in the module housing (161).

10. The reductant delivery system (135) according to claim 9, wherein the reductant quality sensor (176) is positioned in the module housing (161).

11. The reductant delivery system system (135) according to one of the claims 1 to 10, wherein the return passage (188) comprises a check valve (124) that opens away from the supply passage (185).

12. The reductant delivery system (135) according to claim 11, wherein the check valve (124) is positioned in the reductant manifold (119).

13. The reductant delivery system (135) according to claim 12, wherein the return passage (188) comprises an orifice (128) that is positioned fluidly between the check valve (124) and the reductant tank (148).

14. The reductant delivery system (135) according to claim 13, wherein the reductant supply module comprises a module housing, and the check valve (124) and the orifice (128) are both positioned in the housing (161).

15. The reductant delivery system (135) according to claim 13, comprising a fitting (173), the fitting (173) comprising the check valve (124) and the orifice (128).

## Patentansprüche

1. Reduktionsmittelabgabesystem (135), das Folgendes umfasst:
einen Reduktionsmitteltank (148), einen Reduktionsmittelabgabemechanismus (158) und eine Reduktionsmitteldruckquelle (172);
einen Entnahmekanal (184), der fluidtechnisch mit dem Reduktionsmitteltank (148) und der Reduktionsmitteldruckquelle (172) dazwischen verbunden ist;
einen Reduktionsmittelverteiler (119), der Folgendes umfasst:
eine darin angeordnete Verzweigung (182),
einen Versorgungskanal (185), der fluidtechnisch mit der Reduktionsmitteldruckquelle (172) und der Verzweigung (182) dazwischen verbunden ist,
einen Dosierkanal (186), der fluidtechnisch mit dem Reduktionsmittelabgabemechanismus (158) und der Verzweigung (182) dazwischen verbunden ist, und
einen Rückführkanal (188), der fluidtechnisch mit dem Reduktionsmitteltank (148) und der Verzweigung (182) dazwischen verbunden ist; **gekennzeichnet durch**
einen Reduktionsmittelqualitätssensor (176), der in dem Versorgungskanal (185) angeordnet ist.

2. Reduktionsmittelabgabesystem (135) nach Anspruch 1, wobei der Reduktionsmittelqualitätssensor (176) an dem Reduktionsmittelverteiler (119) befestigt ist.

3. Reduktionsmittelabgabesystem (135) nach Anspruch 1, wobei der Versorgungskanal (185) ein Sensoreinbauteil (177) umfasst und wobei der Reduktionsmittelqualitätssensor (176) an dem Sensoreinbauteil (177) befestigt ist.

4. Reduktionsmittelabgabesystem (135) nach einem der Ansprüche 1 bis 3, wobei der Rückführkanal (188) und der Dosierkanal (186) relativ zueinander koaxial in dem Reduktionsmittelverteiler (119) angeordnet sind.

5. Reduktionsmittelabgabesystem (135) nach einem der Ansprüche 1 bis 4, wobei der Versorgungskanal (185), der Rückführkanal (188) und der Dosierkanal (186) derart zusammenwirken, dass sie in dem Reduktionsmittelverteiler (119) eine "T"-Form bilden.

6. Reduktionsmittelabgabesystem (135) nach einem der Ansprüche 1 bis 5, wobei die Reduktionsmitteldruckquelle (172) eine bidirektionale Pumpe ist, die konfiguriert ist, in einem ersten Modus ein Reduktionsmittel zu dem Versorgungskanal (185) zu pumpen, und die konfiguriert ist, in einem zweiten Modus das Reduktionsmittel zu dem Entnahmekanal (184) und zu dem Reduktionsmitteltank (148) zu pumpen.

7. Reduktionsmittelabgabesystem (135) nach einem der Ansprüche 1 bis 5, das ein Umschaltventil, das fluidtechnisch zwischen der Reduktionsmitteldruckquelle (172) und der Verzweigung (182) angeordnet ist, umfasst, wobei die Reduktionsmitteldruckquelle (172) eine unidirektionale Pumpe ist.

8. Reduktionsabgabesystem (135) nach einem der Ansprüche 1 bis 7, das ein Heizelement (130), das angrenzend an den Reduktionsmittelverteiler (119) angeordnet ist, umfasst, wobei das Heizelement (130) konfiguriert ist, den Reduktionsmittelverteiler (119)(119) selektiv zu heizen, um zu verhindern, dass das Reduktionsmittel darin gefriert.

9. Reduktionsmittelabgabesystem (135) nach einem der Ansprüche 1 bis 8, das ein Reduktionsmittelversorgungsmodul (168) umfasst, wobei das Reduktionsmittelversorgungsmodul (168) die Reduktionsmitteldruckquelle (172) und ein Modulgehäuse (161) umfasst, wobei die Reduktionsmitteldruckquelle (172) und der Reduktionsmittelverteiler (119) in dem Modulgehäuse (161) angeordnet sind.

10. Reduktionsmittelabgabesystem (135) nach Anspruch 9, wobei der Reduktionsmittelqualitätssensor (176) in dem Modulgehäuse (161) angeordnet ist.

11. Reduktionsmittelabgabesystem (135) nach einem der Ansprüche 1 bis 10, wobei der Rückführkanal (188) ein Prüfventil (124), das sich in eine von dem Versorgungskanal (185) abgewandte Richtung öffnet, umfasst.

12. Reduktionsmittelabgabesystem (135) nach Anspruch 11, wobei das Prüfventil (124) in dem Reduktionsmittelverteiler (119) angeordnet ist.

13. Reduktionsmittelabgabesystem (135) nach Anspruch 12, wobei der Rückführkanal (188) eine Öffnung (128), die fluidtechnisch zwischen dem Prüfventil (124) und dem Reduktionsmitteltank (148) angeordnet ist, umfasst.

14. Reduktionsmittelabgabesystem (135) nach Anspruch 13, wobei das Reduktionsmittelversorgungsmodul ein Modulgehäuse umfasst und wobei sowohl das Prüfventil (124) als auch die Öffnung (128) in dem Gehäuse (161) angeordnet sind.

15. Reduktionsmittelabgabesystem (135) nach Anspruch 13, das ein Einbauteil (173) umfasst, wobei das Einbauteil (173) das Prüfventil (124) und die Öffnung (128) umfasst.

## Revendications

1. Système (135) de distribution d'agent réducteur, comportant :
un réservoir (148) d'agent réducteur, un mécanisme (158) de distribution d'agent réducteur, et une source (172) de pression d'agent réducteur ;
un passage (184) d'extraction couplé fluidiquement au réservoir (148) d'agent réducteur et à la source (172) de pression d'agent réducteur entre ceux-ci ;
un collecteur (119) d'agent réducteur comportant :
une jonction (182) positionnée dans celui-ci, un passage (185) d'alimentation couplé fluidiquement à la source (172) de pression d'agent réducteur et à la jonction (182) entre celles-ci, un passage (186) de dosage couplé fluidiquement au mécanisme (158) de distribution d'agent réducteur et à la jonction (182) entre ceux-ci, et un passage (188) de retour couplé fluidiquement au réservoir (148) d'agent réducteur et à la jonction (182) entre ceux-ci ; **caractérisé par**
un capteur (176) de qualité d'agent réducteur positionné dans le passage (185) d'alimentation.

2. Système (135) de distribution d'agent réducteur selon la revendication 1, le capteur (176) de qualité d'agent réducteur étant monté sur le collecteur (119) d'agent réducteur.

3. Système (135) de distribution d'agent réducteur selon la revendication 1, le passage (185) d'alimentation comportant un raccord (177) de capteur, et le capteur (176) de qualité d'agent réducteur étant monté sur le raccord (177) de capteur.

4. Système (135) de distribution d'agent réducteur selon l'une des revendications 1 à 3, le passage (188) de retour et le passage (186) de dosage étant positionnés coaxialement l'un par rapport à l'autre à l'intérieur du collecteur (119) d'agent réducteur.

5. Système (135) de distribution d'agent réducteur selon l'une des revendications 1 à 4, le passage (185) d'alimentation et le passage (188) de retour et le passage (186) de dosage coopérant pour former une forme en "T" à l'intérieur du collecteur (119) d'agent réducteur.

6. Système (135) de distribution d'agent réducteur selon l'une des revendications 1 à 5, la source (172) de pression d'agent réducteur étant une pompe bidirectionnelle configurée pour pomper un agent réducteur vers le passage (185) d'alimentation dans un premier mode et configurée pour pomper l'agent réducteur vers le passage (184) d'extraction et vers le réservoir (148) d'agent réducteur dans un deuxième mode.

7. Système (135) de distribution d'agent réducteur selon l'une des revendications 1 à 5, comportant une vanne d'inversion positionnée fluidiquement entre la source (172) de pression d'agent réducteur et la jonction (182), la source (172) de pression d'agent réducteur étant une pompe unidirectionnelle.

8. Système (135) de distribution d'agent réducteur selon l'une des revendications 1 à 7, comportant un élément chauffant (130) positionné de façon à jouxter le collecteur (119) d'agent réducteur, l'élément chauffant (130) étant configuré pour chauffer sélectivement le collecteur (119) d'agent réducteur (119) de façon à empêcher l'agent réducteur de geler dans celui-ci.

9. Système (135) de distribution d'agent réducteur selon l'une des revendications 1 à 8, comportant un module (168) d'alimentation en agent réducteur, le module (168) d'alimentation en agent réducteur comportant la source (172) de pression d'agent réducteur et une enceinte (161) de module, la source (172) de pression d'agent réducteur et le collecteur (119) d'agent réducteur étant positionnés dans l'enceinte (161) de module.

10. Système (135) de distribution d'agent réducteur selon la revendication 9, le capteur (176) de qualité d'agent réducteur étant positionné dans l'enceinte (161) de module.

11. Système (135) de distribution d'agent réducteur selon l'une des revendications 1 à 10, le passage (188) de retour comportant un clapet anti-retour (124) qui s'ouvre à l'écart du passage (185) d'alimentation.

12. Système (135) de distribution d'agent réducteur selon la revendication 11, le clapet anti-retour (124) étant positionné dans le collecteur (119) d'agent réducteur.

13. Système (135) de distribution d'agent réducteur selon la revendication 12, le passage (188) de retour comportant un orifice (128) qui est positionné fluidiquement entre le clapet anti-retour (124) et le réservoir (148) d'agent réducteur.

14. Système (135) de distribution d'agent réducteur selon la revendication 13, le module d'alimentation en agent réducteur comportant une enceinte de module, et le clapet anti-retour (124) et l'orifice (128) étant tous deux positionnés dans l'enceinte (161).

15. Système (135) de distribution d'agent réducteur selon la revendication 13, comportant un raccord (173), le raccord (173) comportant le clapet anti-retour (124) et l'orifice (128).
